# EUROPEAN PATENT APPLICATION

(11) **EP 4 191 446 A1**
(43) Date of publication of application: **07.06.2023**
(21) Application number: 22209493.0
(22) Date of filing: 24.11.2022
(51) Int. Cl.: G06F 21/32, G06F 3/0354, G06F 3/04883, G06F 21/34, G06V 40/12, G07C 9/25, H04L 9/40, G06V 40/30, G07C 9/35

(54) **METHOD AND SYSTEM FOR AUTHENTICATING A USER USING BIOMETRICS AND DIGITIZED HANDWRITTEN SIGNATURE**

(30) Priority: 06.12.2021 TW 110145469
(71) Applicant: Wang, William, New Taipei City 22041 (TW); Su, Yu-Sung, New Taipei City 22041 (TW)
(72) Inventor: Wang, William, New Taipei City 22041 (TW); Su, Yu-Sung, New Taipei City 22041 (TW)
(74) Representative: Murgitroyd & Company

(57) **Abstract**

A method is provided for authenticating a user using biometrics and digitized handwritten signature. A verification server (4) uses a data identifier to find a corresponding piece of personal identification data. A user uses a biometric stylus (2) and a handwriting input device (3) to create a handwriting pattern; meanwhile, the biometric stylus (2) acquires fingerprint data of the user. The handwriting input device (3) transmits the fingerprint data and the handwriting pattern to the verification server (4). The verification server (4) verifies the handwriting pattern and the fingerprint data using a handwriting template and a fingerprint template included in the personal identification data thus found, and obtains user identification data for verifying an identity of the user from the personal identification data when the handwriting pattern and the fingerprint data are successfully verified.

## Description

The disclosure relates to a digital signature system, and more particularly to a method and a system for authenticating a user using biometrics and digitized handwritten signature.

With the advancement of technology, digitized handwritten signatures (handwritten signatures that are inputted electronically) have become a common means for customer identification in the banking industry and for merchants to confirm customer signatures. In order to obtain a signature electronically, usually, a touch pad or signature capture pad is provided for a customer to sign with a stylus, and then the signature handwriting or the signature screen on the touch pad is captured for signature authentication.

However, since the signature handwriting can be imitated and digitized signature files can be forged by other means and uploaded for verification, the industry is unable to confirm whether the person who provides the signature is the real owner of the signature, which may result in transaction disputes.

In addition, when a bank server or an e-commerce server needs to perform signature verification for transactions, or when a customs officer needs to perform identity verifications for border control, they usually receive a to-be-verified signature or to-be-verified fingerprint data from a user, then compare the to-be-verified signature or the to-be-verified fingerprint data with data pieces in a database one by one to find a piece of personal identification data that includes a corresponding signature template or a corresponding fingerprint template, and hence eventually obtain user identification data for verifying an identity of the user from the personal identification data. This entire process is time-consuming.

Therefore, an object of the disclosure is to provide a method and a system for authenticating a user using biometrics and digitized handwritten signature. The method can alleviate at least one of the drawbacks of the prior art.

According to some embodiments of the disclosure, the method includes a first procedure that is associated with data screening, a second procedure that is associated with fingerprint acquisition, a third procedure that is associated with handwriting acquisition, and a fourth procedure that is associated with user authentication. The first procedure includes a step of, by a verification server, receiving a data identifier and finding a piece of personal identification data that corresponds to the data identifier from a database. The second procedure includes a step of, by a biometric stylus that includes a fingerprint sensor, sensing a fingerprint of the user to acquire a piece of fingerprint data, and generating a piece of first verification data that is encrypted and that includes the fingerprint data. The third procedure includes steps of: by a handwriting input device, receiving the first verification data from the biometric stylus; by the handwriting input device, acquiring a handwriting pattern through touch sensing; and by the handwriting input device, generating a piece of second verification data that is encrypted, and that includes the first verification data and the handwriting pattern. The fourth procedure includes steps of: by the verification server, receiving the second verification data from the handwriting input device; by the verification server, decrypting the second verification data to obtain the first verification data and the handwriting pattern; by the verification server, decrypting the first verification data to obtain the fingerprint data; and by the verification server, generating an authentication success message that indicates a success in user authentication when determining at least that the handwriting pattern matches a handwriting template of the personal identification data found in the first procedure, and that the fingerprint data matches a fingerprint template of the personal identification data found in the first procedure.

According to some embodiments of the disclosure, the method includes a first procedure that is associated with data screening, a second procedure that is associated with fingerprint acquisition, a third procedure that is associated with handwriting acquisition, and a fourth procedure that is associated with user authentication. The first procedure includes a step of, by a verification server, receiving a data identifier and finding a piece of personal identification data that corresponds to the data identifier from a database. The second procedure includes a step of, by a biometric stylus that includes a fingerprint sensor, sensing a fingerprint of the user to acquire a piece of fingerprint data, encrypting the fingerprint data to generate a piece of encrypted fingerprint data, and generating a piece of first verification data that includes the encrypted fingerprint data. The third procedure includes steps of: by a handwriting input device, receiving the first verification data from the biometric stylus to obtain the encrypted fingerprint data; by the handwriting input device, acquiring a handwriting pattern through touch sensing; and by the handwriting input device, encrypting the encrypted fingerprint data and the handwriting pattern to generate a piece of second verification data. The fourth procedure includes steps of: by the verification server, receiving the second verification data from the handwriting input device; by the verification server, decrypting the second verification data to obtain the encrypted fingerprint data and the handwriting pattern; by the verification server, decrypting the encrypted fingerprint data to obtain the fingerprint data; and by the verification server, generating an authentication success message that indicates a success in user authentication when determining at least that the handwriting pattern matches a handwriting template of the personal identification data found in the first procedure, and that the fingerprint data matches a fingerprint template of the personal identification data found in the first procedure.

According to the disclosure, the system includes a handwriting input device, a verification server, and a biometric stylus that includes a fingerprint sensor. The biometric stylus, the handwriting input device and the verification server cooperate to perform the method of the disclosure.

Other features and advantages of the disclosure will become apparent in the following detailed description of the embodiment(s) with reference to the accompanying drawings. It is noted that various features may not be drawn to scale.

FIG. 1 is a schematic diagram illustrating an embodiment of an authentication system according to the disclosure.

FIG. 2 is a flow chart illustrating procedures of embodiments of a method for authenticating a user using biometrics and digitized handwritten signature according to the disclosure.

FIG. 3 is a flow chart illustrating steps of a fingerprint acquisition procedure of a first embodiment of the method according to the disclosure.

FIG. 4 is a flow chart illustrating steps of a handwriting input procedure of the first embodiment.

FIG. 5 is a flow chart illustrating steps of a user identification procedure of the first embodiment.

FIG. 6 is a flow chart illustrating steps of a handwriting input procedure of a second embodiment of the method according to the disclosure.

FIG. 7 is a flow chart illustrating steps of a user identification procedure of the second embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

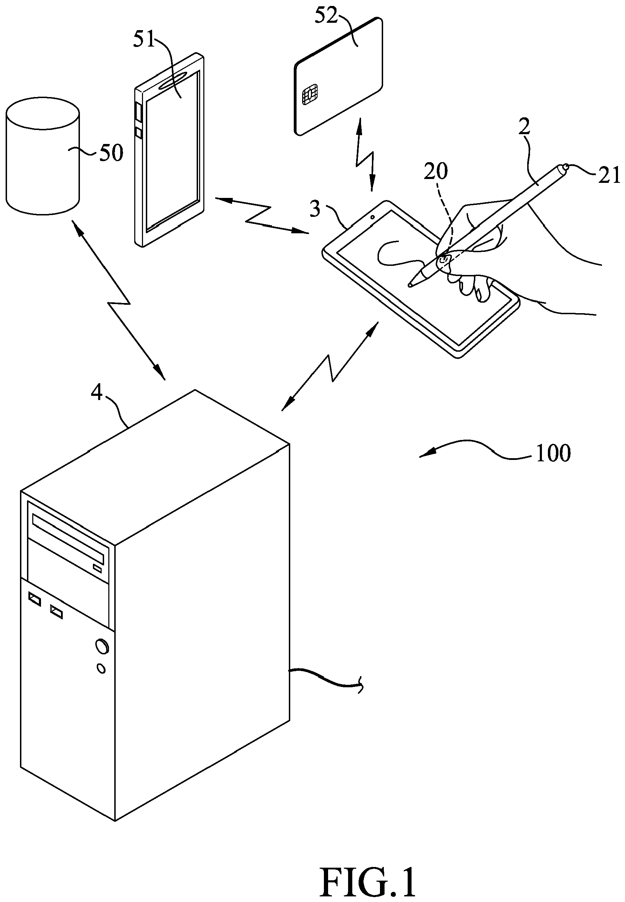

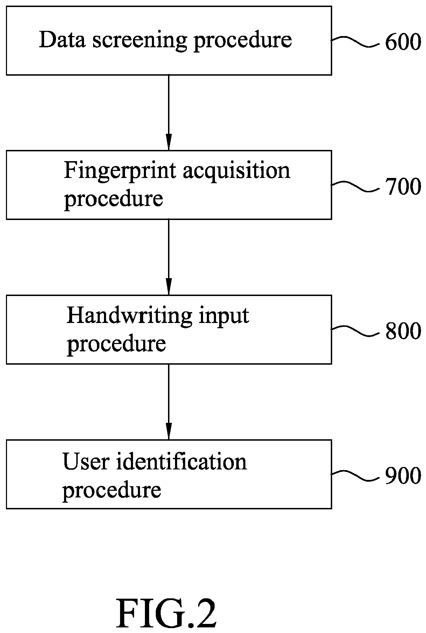

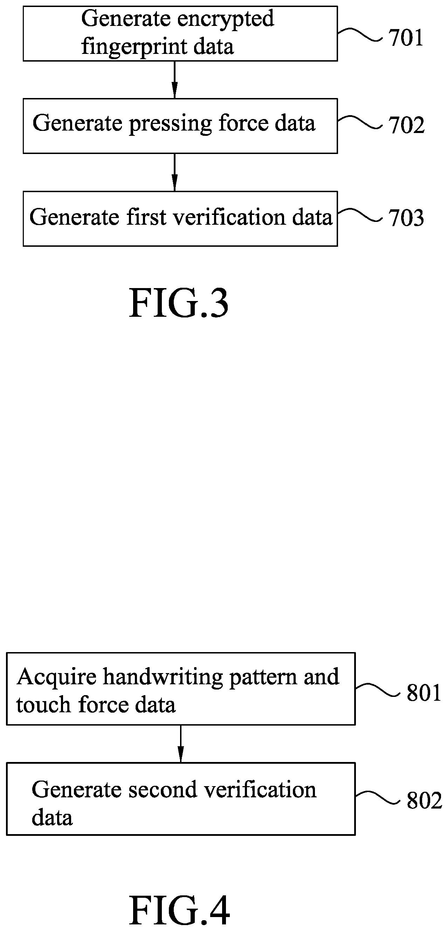

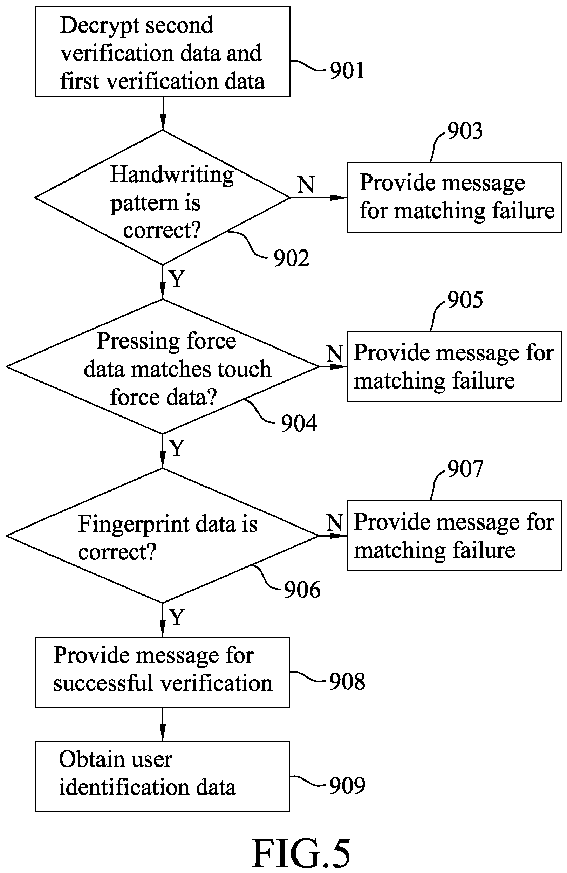

Referring to FIGS. 1 through 5, a first embodiment of a method for authenticating a user using biometrics and digitized handwritten signature according to this disclosure is adapted to be realized in an authentication system 100 by means of electric circuits, firmware and/or software programs, and is adapted for a user to perform identity verification in transactions at stores or banks, to perform identity verification in online transactions at an online banking system or an online shopping platform, or to perform identity verification at the customs. The authentication system 100 includes a biometric stylus 2, a handwriting input device 3, a verification server 4 and a database 50 that cooperate to perform the method.

The biometric stylus 2 can be used to perform writing operation on the handwriting input device 3, includes a fingerprint sensor 20 to sense a fingerprint of the user and a microcontroller (not shown) to perform data encryption, and is configured to communicate with the handwriting input device 3 through wired and/or wireless communication, so as to perform data transmission with the handwriting input device 3. The handwriting input device 3 is configured for touch operation, so either the biometric stylus 2 or hands can be used to perform writing on the handwriting input device 3 through touch sensing. The handwriting input device 3 is configured to communicate with the verification server 4 through wired and/or wireless communication, so as to perform data transmission with the verification server 4. The handwriting input device 3 may be realized as, for example, a touch pad, a credit card machine, a smartphone, a tablet computer, a notebook computer, a touch screen of a bank, a touch screen of a point-of-sale (POS) machine of a store, etc., but this disclosure is not limited to such.

The verification server 4 may be, for example but not limited to, a transaction server of the bank or the POS machine of the store, and is configured to perform identity verification for the user based on data provided by the biometric stylus 2 and the handwriting input device 3. In some embodiments, the verification server 4 may be a third-party verification server that is configured to assist the bank or the store in performing third-party identity verification for the user through the transaction server or the POS machine.

The database 50 stores multiple pieces of personal identification data respectively relating to multiple different users. Each piece of the personal identification data includes, for example but not limited to, a fingerprint template, a handwriting template, a data identifier, user identification data, etc., which relate to the corresponding user. The data identifier may include, for example but not limited to, an equipment code or a predetermined identification code of an electronic device 51 (e.g., an international mobile equipment identity (IMEI) of a smartphone or a smartwatch), an identification code of an integrated circuit (IC) card 52 or an electronic passport (not shown), etc. The user identification data may include, for example but not limited to, a serial number of an identification card, a passport number, a membership number, or any other information that can be used for identity verification. Each piece of the personal identification data may be established through a user registration procedure. In some embodiments, each piece of the personal identification data may include multiple fingerprint templates and/or multiple handwriting templates for the corresponding user.

The verification server 4 is configured to be capable of receiving a data identifier that is provided by the handwriting input device 3, and/or directly reading a data identifier from an electronic device 51 or IC card 52. After receiving the data identifier, the verification server 4 may find, from the database 50, a piece of the personal identification data that corresponds to the data identifier thus received.

The aforesaid wireless communication may include but not limited to any conventional network technology and/or mobile communication technology, such as Wi-Fi, Bluetooth, the fourth/fifth generation of mobile communication technology standards (4G/5G), etc., and this disclosure is not limited to such.

The first embodiment of the method for authenticating a user using biometrics and digitized handwritten signature according to this disclosure includes a data screening procedure 600, a fingerprint acquisition procedure 700, a handwriting input procedure 800, and a user identification procedure 900. These procedures enable the verification server 4 to verify the identity of the user.

In the data screening procedure 600, the verification server 4 receives or acquires a data identifier, and finds a piece of personal identification data that corresponds to the data identifier from a database. The verification server 4 may receive or acquire the data identifier in various manners.

In a first approach, the data identifier is provided by the biometric stylus 2. In the case where the biometric stylus 2 is owned by the user, the biometric stylus 2 may be operated to transmit a data identifier that is built in the biometric stylus 2 to the handwriting input device 3 when the handwriting input device 3 is communicatively connected to the biometric stylus 2 and the verification server 4 for initiating a transaction procedure, and then the handwriting input device 3 would transmit the data identifier to the verification server 4.

In a second approach, the data identifier is provided by the handwriting input device 3. In one example, the handwriting input device 3 may be operated to transmit a data identifier that is built in the handwriting input device 3 to the verification server 4 when the handwriting input device 3 is communicatively connected to the verification server 4 for initiating a transaction procedure. In another example, the handwriting input device 3 may use a short-range sensing or communication technology (e.g., radio frequency identification (RFID), near field communication (NFC), etc.) to acquire a data identifier from the IC card 52 or the electronic device 51, and then transmit the data identifier to the verification server 4. In yet another example, the data identifier may be manually inputted into the handwriting input device 3 (e.g., through touch sensing), and then the handwriting input device 3 would transmit the data identifier to the verification server 4.

In a third approach, the data identifier is acquired by the verification server 4 directly. The verification server 4 may be configured to use the short-range sensing or communication technology or other suitable technologies to acquire a data identifier from the IC card 52 or the electronic device 51.

In some embodiments, the data identifier may be encrypted during the transmission thereof. In such a scenario, the verification server 4 may need to perform decryption in order to obtain the data identifier, but this disclosure is not limited to such.

Referring to FIGS. 1, 2 and 3, the fingerprint acquisition procedure 700 includes steps 701 through 703.

In step 701, the user may hold the biometric stylus 2 with a to-be-sensed finger being in contact with the fingerprint sensor 20, so that the fingerprint sensor 20 senses or scans a fingerprint of the user to obtain a piece of fingerprint data, and encrypts the fingerprint data to obtain a piece of encrypted fingerprint data. Then, the flow goes to step 702.

In step 702, the biometric stylus 2 senses a pressing force on a tip of the biometric stylus 2 (e.g., using a force sensor disposed in the biometric stylus 2) when, for example, the biometric stylus 2 is used to abut against an object (e.g., the handwriting input device 3) with the tip thereof to perform writing on the object, so as to generate a piece of pressing force data. The pressing force data records writing strokes during a pressing period in which the biometric stylus 2 is used to write (e.g., perform a handwriting operation on the handwriting input device 3 via touch sensing), and may include, for example but not limited to, a record of variations of the pressing force applied to the tip of the biometric stylus 2 for each writing stroke during the pressing period, and a pressing time record that contains time points respectively of a beginning and an end of the record of variations of the pressing force for each writing stroke (i.e., starting time and end time of the writing stroke). In this embodiment, the biometric stylus 2 determines initiation and completion of a writing stroke based on continuous abutment of the tip that starts from a time point the tip of the biometric stylus 2 starts to be abutted against and that ends at a time point the tip of the biometric stylus 2 is released from abutment.

In this embodiment, the user may press a control button 21 of the biometric stylus 2 when completing the handwriting operation, so as to control the biometric stylus 2 to end acquisition of the pressing force data. In one embodiment, the biometric stylus 2 may determine that the handwriting operation is done and end acquisition of the pressing force data when the tip has not been pressed for over a predetermined length of time (e.g., several seconds, such as two or three seconds) after the acquisition of the fingerprint data. In one embodiment, the biometric stylus 2 may determine that the handwriting operation is done and end acquisition of the pressing force data when the fingerprint sensor 20 has not captured the fingerprint of the user for over a predetermined length of time (for example but not limited to, 0.5 or 1 second) after the acquisition of the fingerprint data.

In step 703, the biometric stylus 2 encrypts the encrypted fingerprint data and the pressing force data to generate a piece of first verification data, and transmits the first verification data to the handwriting input device 3.

Referring to FIGS. 1, 2 and 4, the handwriting input procedure 800 includes steps 801 and 802.

In step 801, after completing the transmission of the data identifier (if needed to be done by the handwriting input device 3), the handwriting input device 3 acquires a handwriting pattern that corresponds to a plurality of touch points on the handwriting input device 3 and that represents a handwriting of the user as inputted via the handwriting input device 3, and a piece of touch force data of the touch points during a touch input period in which a handwriting operation is performed on the handwriting input device 3. The touch force data records writing strokes during the touch input period, and includes, for each writing stroke, a record of variations of touch forces applied to those of the touch points that correspond to the writing stroke (those of the touch points that are touched as the writing stroke is touch-inputted on the handwriting input device 3), and a touch time record that contains time points respectively of a beginning and an end of the record of variations of the touch forces (i.e., starting time and end time of the writing stroke). In this embodiment, the handwriting input device 3 determines initiation and completion of a writing stroke based on continuous touching on a touch screen or a touch pad (not shown) thereof that starts from a time point touching begins to be sensed by the touch screen or the touch pad to a time point the touch screen or the touch pad no longer senses the touching. During actual implementation, step 702 of the fingerprint verification procedure 700 and step 801 of the handwriting input procedure 800 may be performed simultaneously as the user performs a handwriting operation on the handwriting input device 3 using the biometric stylus 2. The handwriting input device 3 may end step 801 when the touch screen or the touch pad has not been touched for over a predetermined length of time of, for example but not limited to, several seconds (e.g., two or three seconds), and the flow goes to step 802.

In step 802, the handwriting input device 3 encrypts the first verification data, the handwriting pattern and the touch force data to generate a piece of second verification data, and transmits the second verification data to the verification server 4.

Referring to FIGS. 1, 2 and 5, the user identification procedure 900 includes steps 901 through 909.

In step 901, the verification server 4 decrypts the second verification data to obtain the first verification data, the handwriting pattern and the touch force data, and decrypts the first verification data to obtain the encrypted fingerprint data and the pressing force data. Then, the flow goes to step 902.

In step 902, the verification server 4 analyzes and compares the handwriting pattern with a handwriting template of the personal identification data that was found in the data screening procedure 600 using, for example, conventional handwriting comparison techniques, and determines whether the handwriting pattern matches the handwriting template. The handwriting comparison techniques may employ image analysis techniques to compare the handwriting pattern and the handwriting template in terms of, for example but not limited to, a handwriting layout, an order of sequence of the writing strokes, bending of a writing stroke, an angle of a curve writing stroke, breaks, pauses or flow of the writing strokes, feature or signature writing stroke(s), etc. Since the present disclosure does not focus on the handwriting comparison techniques, which are known in the art, details thereof are omitted herein for the sake of brevity.

When the verification server 4 determines that the handwriting pattern does not match the handwriting template (i.e., the handwriting pattern is incorrect), the authentication of the handwriting pattern fails, and the flow goes to step 903, where the verification server 4 generates and transmits an indication message that indicates a matching failure to the handwriting input device 3. When the verification server 4 determines that the handwriting pattern matches the handwriting template (i.e., the handwriting pattern is correct), the flow goes to step 904.

In step 904, the verification server 4 compares the pressing force data with the touch force data, and determines whether the pressing force data matches the touch force data. For example, the verification server 4 may compare the writing strokes as recorded by the pressing force data with the writing strokes as recorded by the touch force data one by one, following an order of sequence of the writing strokes (namely, with respect to each writing stroke of the writing operation, the verification server 4 compares the corresponding pressing force data with the corresponding touch force data). When making comparison with respect to each writing stroke, the verification server 4 may determine whether the pressing time record for the writing stroke matches the touch time record for the writing stroke, and whether the record of variations of the pressing force for the writing stroke matches the record of variations of the touch forces for the writing stroke.

Upon determining that the pressing force data does not match the touch force data (e.g., the pressing time record does not match the touch time record or the record of variations of the pressing force does not match the record of variations of the touch forces), which means that the handwriting pattern was not created using the biometric stylus 2, the flow goes to step 905, where the verification server 4 generates and transmits an indication message that indicates mismatching between the touch force data and the pressing force data to the handwriting input device 3.

Upon determining that the pressing force data matches the touch force data (e.g., the pressing time record matches the touch time record and the record of variations of the pressing force matches the record of variations of the touch forces), which means that the handwriting pattern was created using the biometric stylus 2, the flow goes to step 906.

In step 906, the verification server 4 decrypts the encrypted fingerprint data to obtain the fingerprint data, and uses conventional techniques to analyze and acquire feature points of the fingerprint data. The conventional techniques may include, for example but not limited to, image processing such as fingerprint area detection, image enhancement, image binarization, image thinning, etc., extraction of fingerprint patterns and detailed features, etc.

Then, the verification server 4 compares the fingerprint data with the fingerprint template of the personal identification data that was found in the data screening procedure 600, and determines whether the feature points of the fingerprint data match the fingerprint template. When the determination is negative, which means that the captured fingerprint does not match the fingerprint template of the personal identification data (i.e., the fingerprint data is incorrect), the flow goes to step 907, where the verification server 4 generates and transmits an indication message that indicates mismatching in fingerprint recognition to the handwriting input device 3, and terminates the transaction that corresponds to the identity authentication. When the determination is affirmative (i.e., the fingerprint data is correct), which means that the captured fingerprint matches the fingerprint template of the personal identification data, the flow goes to step 908.

In step 908, the verification server 4 transmits an indication message that indicates successful identity verification to the handwriting input device 3, the transaction server of the bank, the POS machine of the store, and/or the server of the customs for notifying the user, the bank, the store, and/or the customs officer that the identity verification has been successfully completed. Then, the flow goes to step 909, where the verification server 4 obtains the user identification data from the personal identification data that was found in the data screening procedure 600.

In practice, the verification server 4 may perform the corresponding transaction or customs clearance of the user based on the user identification data or transmit the user identification data thus obtained to the transaction server of the bank, the POS machine of the store, the server of the customs or the handwriting input device 3, so that they can execute desired transaction operation or customs clearance based on the user identification data. Examples of the desired transaction operation may include but not limited to, cash withdrawal, payment operation, product ordering, and so on.

Through the abovementioned embodiment, when the user intends to perform a transaction at a bank or a store or perform identity verification at the customs, he or she may use one of the abovementioned approaches to provide the data identifier to the verification server 4 while performing fingerprint sensing and/or providing handwritten signature, so that the verification server 4 can, before receiving the second verification data, start to find the personal identification data that corresponds to the data identifier from the database 50 for the subsequent verifications with respect to the handwriting pattern and the fingerprint data.

Therefore, the method of the present disclosure may improve the drawback of the conventional authentication method where the verification server 4 has to receive the fingerprint data or the handwriting pattern first, in order to enable the verification server 4 to compare the fingerprint data or the handwriting pattern with numerous pieces of personal identification data one by one to find the personal identification data that includes the matched fingerprint template or the matched handwriting template. As a result, the system 100 and the method of the present disclosure can reduce the overall time required for identity verification.

By virtue of using the biometric stylus 2 and the handwriting input device 3 to obtain the pressing force data and the touch force data in addition to the fingerprint data and the handwriting pattern, the verification server 4 compares not only the handwriting pattern with the handwriting template and the fingerprint data with the fingerprint template, but also the pressing force data with the touch force data, so as to ensure that the handwriting pattern was created using the biometric stylus 2. The user identification data is obtained when the aforesaid comparisons result in successful matching so that the transaction server or the POS machine can complete the desired transaction operation or the customs can complete the identity verification for clearance based on the user identification data, thereby significantly enhancing accuracy of identity verification and security of transactions.

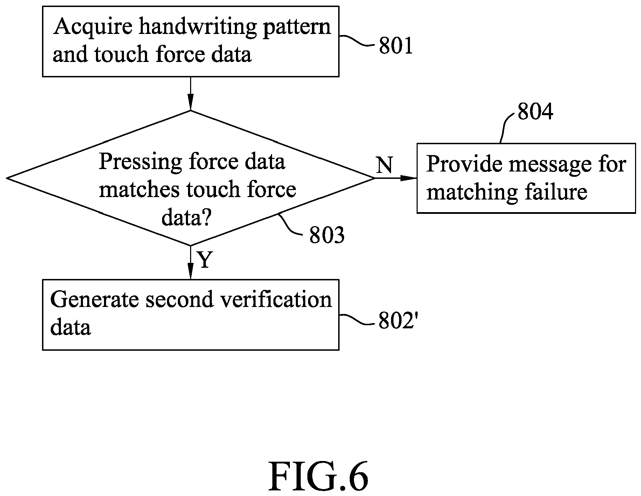

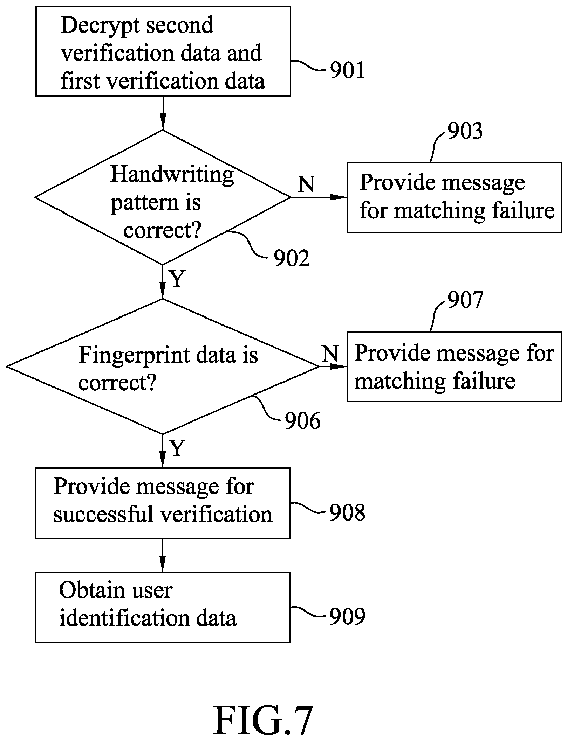

Referring to FIGS. 1, 2, 6 and 7, a second embodiment of a method for authenticating a user using biometrics and digitized handwritten signature according to this disclosure is provided. The second embodiment is similar to the first embodiment, and differs from the first embodiment in the handwriting input procedure 800 and the user identification procedure 900.

The handwriting input procedure 800 of the second embodiment includes steps 801, 802', 803 and 804. Step 801 of the second embodiment is the same as that of the first embodiment, so details thereof are omitted herein for the sake of brevity. After step 801, the flow goes to step 803.

In step 803, the handwriting input device 3 decrypts the first verification data to obtain the encrypted fingerprint data and the pressing force data, and analyzes and compares the pressing force data with the touch force data obtained in step 801, so as to determine whether the handwriting pattern was created using the biometric stylus 2. Upon determining that the pressing force data does not match the touch force data, the flow goes to step 804, where the handwriting input device 3 generates an indication message that indicates mismatching between the touch force data and the pressing force data. Otherwise, the flow goes to step 802'.

In step 802', the handwriting input device 3 encrypts the encrypted fingerprint data and the handwriting pattern to generate the second verification data, and transmits the second verification data to the verification server 4.

The user identification procedure 900 of the second embodiment includes steps 901 through 903 and 906 through 909.

Steps 901 through 903 of the second embodiment are similar to those of the first embodiment. In step 901 of the second embodiment, the verification server 4 decrypts the second verification data to obtain the encrypted fingerprint data and the handwriting pattern. In step 902, the verification server 4 compares the handwriting pattern with the handwriting template of the personal identification data that was found in the data screening procedure 600. When the handwriting pattern is incorrect, the flow goes to step 903. Otherwise, the flow goes to step 906.

Steps 906 through 909 of the second embodiment are similar to those of the first embodiment. In step 906, the verification server 4 compares the fingerprint data with the fingerprint template of the personal identification data that was found in the data screening procedure 600. When the fingerprint data is incorrect, the flow goes to step 907, where the verification server 4 generates and transmits an indication message that indicates mismatching in fingerprint recognition to the handwriting input device 3, and terminates the transaction that corresponds to the identity authentication. Otherwise, the flow goes to step 908, where the verification server 4 transmits the indication message that indicates successful identity verification to the handwriting input device 3, the transaction server of the bank, the POS machine of the store, and/or the server of the customs. In step 909 that follows step 908, the verification server 4 obtains the user identification data from the personal identification data that was found in the data screening procedure 600.

The first and second embodiments compare not only the handwriting pattern with the handwriting template, but also the pressing force data with the touch force data. In some embodiments, the comparison between the pressing force data and the touch force data may be omitted, and the acquisitions of the pressing force data and the touch force data are thus not required. The combination of the verifications of the fingerprint and the handwriting pattern can promote the accuracy of identity verification and the security of transactions.

Since the first verification data is encrypted data, it is not necessary for the biometric stylus 2 to encrypt the fingerprint data in some embodiments. On the other hand, in embodiments that encrypt the fingerprint data in the fingerprint acquisition procedure 700, generation of the first verification data may involve no additional encryption (e.g., the first verification data can merely be the encrypted fingerprint data itself or a collection of the encrypted fingerprint data and the pressing force data).

In summary, through the embodiments of the system 100 and the method for authenticating a user using biometrics and digitized handwritten signature, when a user intends to perform identity verification, the verification server 4 may find the personal identification data that corresponds to the user from the database 50 based on the data identifier that is provided in advance to the generation of the fingerprint data and the handwriting pattern, where the personal identification data thus found is used for subsequent verification of the fingerprint data and the handwriting pattern. In addition to achieving real-time verification with promoted accuracy of identity verification and enhanced security of the transaction, time required for the entire identification authentication procedure can be significantly reduced.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for authenticating a user using biometrics and digitized handwritten signature, **characterized by**:
a first procedure (600) that is associated with data screening, and that includes a step of, by a verification server (4), receiving a data identifier and finding a piece of personal identification data that corresponds to the data identifier from a database;
a second procedure (700) that is associated with fingerprint acquisition, and that includes a step of, by a biometric stylus (2) that includes a fingerprint sensor (20), sensing a fingerprint of the user to acquire a piece of fingerprint data, and generating (703) a piece of first verification data that is encrypted and that includes the fingerprint data;
a third procedure (800) that is associated with handwriting acquisition, and that includes steps of:
by a handwriting input device (3), receiving the first verification data from the biometric stylus;
by the handwriting input device (3), acquiring a handwriting pattern through touch sensing; and
by the handwriting input device (3), generating (802) a piece of second verification data that is encrypted, and that includes the first verification data and the handwriting pattern; and
a fourth procedure (900) that is associated with user authentication, and that includes steps of:
by the verification server (4), receiving the second verification data from the handwriting input device (3);
by the verification server (4), decrypting (901) the second verification data to obtain the first verification data and the handwriting pattern;
by the verification server (4), decrypting (901) the first verification data to obtain the fingerprint data; and
by the verification server (4), generating (908) an authentication success message that indicates a success in user authentication when determining at least that the handwriting pattern matches a handwriting template of the personal identification data found in the first procedure (600), and that the fingerprint data matches a fingerprint template of the personal identification data found in the first procedure (600).

2. The method of claim 1, **characterized in that** the data identifier is built in the biometric stylus (2), and the first procedure (600) further includes steps of:
by the biometric stylus (2), transmitting the data identifier to the handwriting input device (3); and
by the handwriting input device (3), transmitting the data identifier to the verification server (4), so as to trigger the verification server (4) to find the personal identification data.

3. The method of claim 1, **characterized in that** the data identifier is built in one of an electronic device (51) and an integrated circuit, IC, card (52), and the first procedure (600) further includes steps of:
by the handwriting input device (3), reading out the data identifier from said one of the electronic device (51) and the IC card (52); and
by the handwriting input device (3), transmitting the data identifier to the verification server (4), so as to trigger the verification server (4) to find the personal identification data.

4. The method of claim 1, **characterized in that** the data identifier is built in or manually inputted into the handwriting input device (3), and the first procedure (600) further includes a step of, by the handwriting input device (3), transmitting the data identifier to the verification server (4), so as to trigger the verification server (4) to find the personal identification data.

5. The method of any one of the preceding claims, **characterized in that** the second procedure (700) further includes a step of
by the biometric stylus (2), sensing a pressing force on a tip thereof during a pressing period in which the tip is pressed to generate (702) a piece of pressing force data;
wherein the first verification data generated in the second procedure (700) includes the fingerprint data and the pressing force data;
wherein the handwriting pattern corresponds to a plurality of touch points on the handwriting input device (3), and the third procedure (800) further includes a step of
by the handwriting input device (3), sensing touch forces applied to the touch points as the handwriting pattern is being inputted on the handwriting input device (3) to generate a piece of touch force data;
wherein the step of generating (802) the second verification data in the third procedure (800) is performed by encrypting the first verification data, the handwriting pattern and the touch force data; and
wherein, in the fourth procedure (900),
the step of decrypting (901) the second verification data is to obtain the first verification data, the handwriting pattern and the touch force data,
the step of decrypting (901) the first verification data is to obtain the fingerprint data and the pressing force data, and
the step of generating (908) the authentication success message is performed upon determining that the handwriting pattern matches the handwriting template, that the pressing force data matches the touch force data, and that the fingerprint data matches the fingerprint template.

6. The method of claim 5, **characterized in that** the pressing force data includes a record of variations of the pressing force applied to the tip of the biometric stylus (2) during the pressing period in which the biometric stylus (2) is used to perform writing on an object such that the tip of the biometric stylus (2) abuts against the object;
wherein the touch force data includes a record of variations of the touch forces applied to the touch points on the handwriting input device (3) during a touch input period in which the handwriting pattern is being inputted on the handwriting input device (3); and
wherein, in the fourth procedure (900), the verification server (4) determines whether the pressing force data matches the touch force data by determining whether the record of variations of the pressing force matches the record of variations of the touch forces.

7. The method of claim 5 or 6, **characterized in that** the second procedure further includes a step of
encrypting the fingerprint data to generate a piece of encrypted fingerprint data; and
wherein the step of generating the first verification data in the second procedure is performed by encrypting the encrypted fingerprint data and the pressing force data.

8. A method for authenticating a user using biometrics and digitized handwritten signature, **characterized by**:
a first procedure (600) that is associated with data screening, and that includes a step of, by a verification server (4), receiving a data identifier and finding a piece of personal identification data that corresponds to the data identifier from a database;
a second procedure (700) that is associated with fingerprint acquisition, and that includes a step of, by a biometric stylus (2) that includes a fingerprint sensor (20), sensing a fingerprint of the user to acquire a piece of fingerprint data, encrypting the fingerprint data to generate (701) a piece of encrypted fingerprint data, and generating (703) a piece of first verification data that includes the encrypted fingerprint data;
a third procedure (800) that is associated with handwriting acquisition, and that includes steps of:
by a handwriting input device (3), receiving the first verification data from the biometric stylus to obtain the encrypted fingerprint data;
by the handwriting input device (3), acquiring (801) a handwriting pattern through touch sensing; and
by the handwriting input device (3), encrypting the encrypted fingerprint data and the handwriting pattern to generate (802') a piece of second verification data; and
a fourth procedure (900) that is associated with user authentication, and that includes steps of:
by the verification server (4), receiving the second verification data from the handwriting input device (3);
by the verification server (4), decrypting (901) the second verification data to obtain the encrypted fingerprint data and the handwriting pattern;
by the verification server (4), decrypting the encrypted fingerprint data to obtain the fingerprint data; and
by the verification server (4), generating (908) an authentication success message that indicates a success in user authentication when determining at least that the handwriting pattern matches a handwriting template of the personal identification data found in the first procedure (600), and that the fingerprint data matches a fingerprint template of the personal identification data found in the first procedure (600).

9. The method of claim 8, **characterized in that** the data identifier is built in the biometric stylus (2), and the first procedure (600) further includes steps of:
by the biometric stylus (2), transmitting the data identifier to the handwriting input device (3); and
by the handwriting input device (3), transmitting the data identifier to the verification server (4), so as to trigger the verification server (4) to find the personal identification data.

10. The method of claim 8, **characterized in that** the data identifier is built in one of an electronic device (51) and an integrated circuit, IC, card (52), and the first procedure (600) further includes steps of:
by the handwriting input device (3), reading out the data identifier from said one of the electronic device (51) and the IC card (52); and
by the handwriting input device (3), transmitting the data identifier to the verification server (4), so as to trigger the verification server (4) to find the personal identification data.

11. The method of claim 8, **characterized in that** the data identifier is built in or manually inputted into the handwriting input device (3), and the first procedure (600) further includes a step of, by the handwriting input device (3), transmitting the data identifier to the verification server (4), so as to trigger the verification server (4) to find the personal identification data.

12. The method of any one of claims 8 to 11, **characterized in that** the second procedure (700) further includes a step of:
by the biometric stylus (2), sensing a pressing force on a tip thereof during a pressing period in which the tip is pressed to generate (702) a piece of pressing force data;
wherein the first verification data generated in the second procedure (700) includes the encrypted fingerprint data and the pressing force data;
wherein the handwriting pattern corresponds to a plurality of touch points on the handwriting input device (3), and the third procedure (800) further includes a step of:
by the handwriting input device (3), sensing touch forces applied to the touch points as the handwriting pattern is being inputted on the handwriting input device (3) to generate (801) a piece of touch force data; and
wherein the step of generating (802') the second verification data in the third procedure (800) is performed by encrypting the encrypted fingerprint data and the handwriting pattern upon determining that the pressing force data matches the touch force data.

13. The method of claim 12, **characterized in that** the step of generating (703) the first verification data in the second procedure (700) is performed by encrypting the encrypted fingerprint data and the pressing force data; and
wherein the third procedure (800) further includes a step of, by the handwriting input device (3), decrypting the first verification data to obtain the encrypted fingerprint data and the pressing force data.

14. The method of claim 12 or 13, **characterized in that** the pressing force data includes a record of variations of the pressing force applied to the tip of the biometric stylus (2) during the pressing period in which the biometric stylus (2) is used to perform writing on an object such that the tip of the biometric stylus (2) abuts against the object;
wherein the touch force data includes a record of variations of the touch forces applied to the touch points on the handwriting input device (3) during a touch input period in which the handwriting pattern is being inputted on the handwriting input device (3); and
wherein, in the fourth procedure (900), the verification server (4) determines (904) whether the pressing force data matches the touch force data by determining whether the record of variations of the pressing force matches the record of variations of the touch forces.

15. A system for authenticating a user using biometrics and digitized handwritten signature, **characterized by** a handwriting input device (3), a verification server (4), and a biometric stylus (2) that includes a fingerprint sensor (20), wherein the biometric stylus (2), the handwriting input device (3) and the verification server (4) cooperate to perform the method of any one of claims 1 to 14.
